# EUROPEAN PATENT APPLICATION

(11) **EP 4 773 193 A1**
(43) Date of publication of application: **08.07.2026**
(21) Application number: 25869618.6
(22) Date of filing: 23.09.2025
(51) Int. Cl.: H01M 4/04, H01M 4/13, H01M 10/052, B32B 15/08, H01M 4/02

(54) **METHOD FOR MANUFACTURING ELECTRODE FOR LITHIUM SECONDARY BATTERY, ELECTRODE FOR LITHIUM SECONDARY BATTERY MANUFACTURED THEREBY, LITHIUM SECONDARY BATTERY COMPRISING SAME, AND TRANSFER LAMINATE FOR PRE-LITHIATION**

(30) Priority: 25.09.2024 KR 20240129762; 22.09.2025 KR 20250136087
(71) Applicant: LG Energy Solution, Ltd., Seoul 07335 (KR)
(72) Inventor: LEE, Ilha, Daejeon 34122 (KR); JOO, Mun Kyu, Daejeon 34122 (KR); HONG, Doyoung, Daejeon 34122 (KR); KWON, Yohan, Daejeon 34122 (KR); CHAE, Jonghyun, Daejeon 34122 (KR)
(74) Representative: Hoffmann Eitle
(86) International application number: PCT/KR2025/014818
(87) International publication number: WO 2026/071654

(57) **Abstract**

The present invention relates to a method for manufacturing an electrode for a lithium secondary battery, the method including the step of laminating a transfer laminate including a lithium metal layer and a carrier film on one surface of an electrode active material layer provided on at least one surface of an electrode current collector layer, wherein at least one surface of the carrier film has a maximum height roughness (Sz) in a vertical direction of 17 µm or less and an arithmetic mean roughness (Sa) of 3 µm or less, and to an electrode for a lithium secondary battery manufactured thereby, a lithium secondary battery including the same, and a transfer laminate for pre-lithiation.

## Description

### [Technical Field]

The present invention relates to a method for manufacturing an electrode for a lithium secondary battery, an electrode for a lithium secondary battery manufactured thereby, and a lithium secondary battery and a transfer laminate(transfer stack) for pre-lithiation including the electrode.

This application claims priority to and the benefit of Korean Patent Application No. 10-2024-0129762 filed in the Korean Intellectual Property Office on September 25, 2024 and Korean Patent Application No. 10-2025-0136087 filed in the Korean Intellectual Property Office on September 22, 2025, the entire contents of which are incorporated herein by reference.

### [Background Art]

Due to the rapid increase in the use of fossil fuels, the demand for the use of alternative energy or clean energy is increasing, and as part thereof, the fields that are being studied most actively are the fields of power generation and power storage using an electrochemical reaction.

At present, a secondary battery is a representative example of an electrochemical device that uses such electrochemical energy, and the specified range of use thereof tends to be gradually expanding.

Along with the technology development and increased demand for mobile devices, the demand for secondary batteries as energy sources is increasing sharply. Among such secondary batteries, lithium secondary batteries having high energy density and voltage, long cycle life, and low self-discharging rate have been commercialized and widely used. In addition, research is being actively conducted on a method for manufacturing a high-density electrode having a higher energy density per unit volume as an electrode for such a high-capacity lithium secondary battery.

In general, a secondary battery includes a positive electrode, a negative electrode, a separator interposed between the positive electrode and the negative electrode, an electrolyte, and the like. In addition, the electrode such as a positive electrode and a negative electrode may have an electrode active material layer provided on a current collector.

Note that lithium secondary batteries undergo lithium loss from the first charge after a battery is manufactured. During subsequent charging and discharging cycles and high-temperature storage periods, lithium loss continues to occur, albeit in very small amounts, thereby causing progressive degradation of the battery. To compensate for such lithium loss, lithium is additionally introduced into a battery before the battery is operated, which is called pre-lithiation.

However, residual lithium that remains on the surface of the electrode without being used in the pre-lithiation reaction may be formed, which may cause lithium precipitation or lithium loss during operation of the battery.

### [Citation List]

### [Patent Literature]

(Patent Literature 1) Japanese Patent Application Publication No. 2009-080971

### [Detailed Description of the Invention]

### [Technical Problem]

The present invention is intended to provide a method for manufacturing an electrode for a lithium secondary battery capable of reducing residual lithium formed on an electrode surface due to pre-lithiation, an electrode for a lithium secondary battery manufactured thereby, and a lithium secondary battery and a transfer laminate for pre-lithiation including the electrode.

### [Technical Solution]

An exemplary embodiment of the present specification provides a method for manufacturing an electrode for a lithium secondary battery, the method including laminating a transfer laminate including a lithium metal layer and a carrier film on one surface of an electrode active material layer provided on at least one surface of an electrode current collector layer, wherein at least one surface of the carrier film has a maximum height roughness (Sz) in a vertical direction of 17 µm or less and an arithmetic mean roughness (Sa) of 3 µm or less.

An exemplary embodiment of the present specification provides an electrode for a lithium secondary battery, including an electrode current collector layer; and an electrode active material layer, and manufactured by the above-described manufacturing method, wherein an area of residual lithium present on a surface of the electrode for a lithium secondary battery is 6% or less of a total surface area of the electrode for a lithium secondary battery.

Another exemplary embodiment of the present specification provides a lithium secondary battery including the above-described electrode for a lithium secondary battery; a separator; and an electrolyte solution.

An exemplary embodiment of the present specification provides a battery module including the above-described lithium secondary battery.

Another exemplary embodiment of the present specification provides a battery pack including the above-described battery module.

An exemplary embodiment of the present specification provides a battery pack including the above-described lithium secondary battery.

Finally, an exemplary embodiment of the present specification provides a transfer laminate for pre-lithiation, including a lithium metal layer; and a carrier film, wherein a surface of the carrier film facing the lithium metal layer has a maximum height roughness (Sz) in a vertical direction of 17 µm or less and an arithmetic mean roughness (Sa) of 3 µm or less.

### [Advantageous Effects]

The method for manufacturing an electrode for a lithium secondary battery according to an exemplary embodiment described in the present specification can manufacture an electrode for a lithium secondary battery and a lithium secondary battery including the same, in which lithium precipitation or lithium loss that may occur during operation of a battery is suppressed by reducing an amount of residual lithium that remains on an electrode surface without being used in the pre-lithiation reaction.

When pre-lithiation is performed using the transfer laminate for pre-lithiation according to an exemplary embodiment described in the present specification, an electrode for a lithium secondary battery can be obtained in which lithium precipitation or lithium loss that may occur during operation of the battery is suppressed by reducing residual lithium formed on the surface of the pre-lithiated electrode.

### [Brief Description of Drawings]

FIG. 1 is a flowchart showing a method for manufacturing an electrode for a lithium secondary battery according to an exemplary embodiment of the present invention.
FIG. 2 is a diagram showing a transfer laminate and an electrode for a lithium secondary battery according to an exemplary embodiment of the present invention.
FIG. 3 is a representation showing surfaces of electrodes for a lithium secondary battery after completion of pre-lithiation according to an Example and Comparative Examples of the present invention.
FIG. 4 is a representation showing surfaces of electrodes for a lithium secondary battery after completion of pre-lithiation according to an Example and Comparative Examples of the present invention, observed at a magnification of ×200 under a microscope.
FIG. 5 is a view showing a stack structure of a lithium secondary battery manufactured according to an exemplary embodiment of the present invention.
FIG. 6 is a representation showing measurement results of surface roughness of carrier films used in the manufacture of electrodes for a lithium secondary battery according to an Example and Comparative Examples of the present invention.

### [Best Mode]

Before describing the present invention, some terms are first defined.

As used herein, when it is described that one part "includes", "comprises" or "has" one constituent element, unless otherwise specifically described, this does not mean that another constituent element is excluded, but means that another constituent element may be further included.

It will be further understood that the terms "comprises", "includes" or "have" when used in the present specification specify the presence of stated features, integers, steps, constitutional elements and/or combinations thereof, but do not preclude the presence or addition of one or more other features, integers, steps, constitutional elements, and/or combinations thereof.

In the present specification, 'p to q' means a range of 'p or more and q or less'.

In the present specification, when a part of a layer or the like is referred to as being "above" or "on" another part, it may be directly on the other element or an intervening element may also be present. In contrast, when an element is referred to as being "directly on" another element, there are no intervening elements present. Further, when an element is referred to as being "above" or "on" a reference portion, the element is positioned above or below the reference portion, and it does not necessarily mean that the element is positioned "above" or "on" in a direction opposite to gravity.

As used herein, the singular forms of terms are intended to include the plural forms as well, unless the context clearly indicates otherwise.

Hereinafter, the present invention will be described in more detail for better understanding of the present invention. The present invention can be variously implemented and is not limited to the following embodiments. The terms or words used throughout the present specification and the claims should not be construed as being limited to their ordinary or dictionary meanings, but construed as having meanings and concepts consistent with the technical idea of the present invention, based on the principle that an inventor may properly define the concepts of the words or terms to best explain the invention.

A method for manufacturing an electrode for a lithium secondary battery according to an exemplary embodiment of the present specification includes the step of laminating a transfer laminate including a lithium metal layer and a carrier film on one surface of an electrode active material layer provided on at least one surface of an electrode current collector layer, wherein at least one surface of the carrier film has a maximum height roughness (Sz) in a vertical direction of 17 µm or less and an arithmetic mean roughness (Sa) of 3 µm or less.

In an exemplary embodiment of the present specification, the step of laminating the transfer laminate on at least one surface of the electrode active material layer is to laminate the transfer laminate such that the lithium metal layer comes into contact with at least one surface of the electrode active material layer, which is a step for pre-lithiating the electrode active material layer with lithium metal.

The method for manufacturing an electrode for a lithium secondary battery according to an exemplary embodiment of the present specification can compensate for irreversible capacity by pre-lithiating at least one surface of the electrode active material layer to prevent lithium loss, thereby improving battery capacity or cycle performance.

The pre-lithiation according to an exemplary embodiment of the present specification may be any one of pre-lithiation by an electrochemical method, pre-lithiation using SLMP, and pre-lithiation by a direct contact method, and specifically, pre-lithiation by a direct contact method.

The pre-lithiation by the direct contact method may be classified into a dry method in which transfer is performed by bringing a lithium metal layer into contact with and pressing it against an electrode active material layer, and a wet method in which the lithium metal layer is brought into contact with an electrode active material layer wetted with an electrolyte solution. In particular, the transfer method through direct contact of the lithium metal layer has the advantage of a faster process speed and higher productivity, since it can be applied to a roll-to-roll process suitable for mass production of electrodes, unlike other methods.

However, the transfer method through direct contact of the lithium metal layer may cause formation of residual lithium unreacted during the pre-lithiation reaction on the electrode surface after completion of pre-lithiation. The residual lithium may serve as sites for lithium precipitation during subsequent operation of a battery, and if an amount of residual lithium is excessive, it may instead result in loss of the introduced lithium.

Accordingly, the present invention is characterized in that, by using a carrier film having a small surface roughness, height differences of a lithium metal layer formed on one surface of the carrier film can be reduced, and as a result, the entire area of the lithium metal layer can undergo a pre-lithiation reaction while coming into uniform contact with the electrode active material layer, thereby reducing the amount of lithium remaining on the electrode surface.

That is, the method for manufacturing an electrode for a lithium secondary battery according to an exemplary embodiment of the present specification is characterized in that, by using, on at least one surface of an electrode active material layer, a transfer laminate including a lithium metal layer and a carrier film, at least one surface of the carrier film falling within ranges of a maximum height roughness (Sz) in a vertical direction of 17 µm or less and an arithmetic mean roughness (Sa) of 3 µm or less, during pre-lithiation, the amount of residual lithium formed on the electrode surface after lamination can be reduced, thereby suppressing lithium precipitation and loss of introduced lithium.

In an exemplary embodiment of the present specification, at least one surface of the carrier film may have a maximum height roughness (Sz) in a vertical direction of 17 µm or less and an arithmetic mean roughness (Sa) of 3 µm or less.

In an exemplary embodiment of the present specification, the maximum height roughness (Sz) in the vertical direction and the arithmetic mean roughness (Sa) of the carrier film may be calculated by obtaining an image using a microscope (KEYENCE VHX-7000N) at a magnification of ×200 and then specifying a region.

In addition, the maximum height roughness (Sz) and the arithmetic mean roughness (Sa) of the carrier film are the roughness before the lithium metal layer is provided on one surface of the carrier film, but the roughness range may be the same even after the lithium metal layer is provided.

In an exemplary embodiment of the present specification, a surface of the carrier film facing the lithium metal layer may have the maximum height roughness (Sz) in the vertical direction of 17 µm or less and the arithmetic mean roughness (Sa) of 3 µm or less.

In an exemplary embodiment of the present specification, the surface of the carrier film facing the lithium metal layer may have the maximum height roughness (Sz) in a vertical direction of 17 µm or less and the arithmetic mean roughness (Sa) of 3 µm or less, and specifically, the maximum height roughness (Sz) may be 15 µm or less, and the arithmetic mean roughness (Sa) may be 2 µm or less, and more specifically, the maximum height roughness (Sz) may be 10 µm or less, and the arithmetic mean roughness (Sa) may be 1 µm or less.

In an exemplary embodiment of the present specification, the surface of the carrier film facing the lithium metal layer may have the maximum height roughness (Sz) in the vertical direction of 0.5 µm or more and the arithmetic mean roughness (Sa) of 0.05 µm or more, and specifically, the maximum height roughness (Sz) may be 1 µm or more, and the arithmetic mean roughness (Sa) may be 0.1 µm or more, and more specifically, the maximum height roughness (Sz) may be 2 µm or more, and the arithmetic mean roughness (Sa) may be 0.2 µm or more.

That is, in an exemplary embodiment of the present specification, the surface of the carrier film facing the lithium metal layer may have the maximum height roughness (Sz) in the vertical direction of 0.5 µm or more and 17 µm or less and the arithmetic mean roughness (Sa) of 0.05 µm or more and 3 µm or less, and specifically, the maximum height roughness (Sz) may be 1 µm or more and 15 µm or less, and the arithmetic mean roughness (Sa) may be 0.1 µm or more and 2 µm or less, and more specifically, the maximum height roughness (Sz) may be 2 µm or more and 10 µm or less, and the arithmetic mean roughness (Sa) may be 0.2 µm or more and 1 µm or less.

When the surface roughness of the surface of the carrier film facing the lithium metal layer, according to an exemplary embodiment of the present specification, falls within the specific range, the lithium metal layer is evenly distributed on the carrier film during the process of manufacturing the transfer laminate, so that height differences of the lithium metal layer can be reduced. As a result, when pressure is applied during lamination, the entire area of the lithium metal layer can come into uniform contact with the electrode active material layer, allowing pre-lithiation to proceed uniformly without being excessive in any local region, thereby minimizing the amount of residual lithium on the electrode surface.

In an exemplary embodiment of the present specification, a back surface of the carrier film opposite to the surface facing the lithium metal layer may have the maximum height roughness (Sz) in the vertical direction of 17 µm or less and the arithmetic mean roughness (Sa) of 3 µm or less.

In an exemplary embodiment of the present specification, the back surface of the carrier film opposite to the surface facing the lithium metal layer may have the maximum height roughness (Sz) in the vertical direction of 17 µm or less and the arithmetic mean roughness (Sa) of 3 µm or less, and specifically, the maximum height roughness (Sz) may be 15 µm or less, and the arithmetic mean roughness (Sa) may be 2 µm or less, and more specifically, the maximum height roughness (Sz) may be 10 µm or less, and the arithmetic mean roughness (Sa) may be 1 µm or less.

In an exemplary embodiment of the present specification, the back surface of the carrier film opposite to the surface facing the lithium metal layer may have the maximum height roughness (Sz) in the vertical direction of 0.5 µm or more and the arithmetic mean roughness (Sa) of 0.05 µm or more, and specifically, the maximum height roughness (Sz) may be 1 µm or more, and the arithmetic mean roughness (Sa) may be 0.1 µm or more, and more specifically, the maximum height roughness (Sz) may be 2 µm or more, and the arithmetic mean roughness (Sa) may be 0.2 µm or more.

That is, in an exemplary embodiment of the present specification, the back surface of the carrier film opposite to the surface facing the lithium metal layer may have the maximum height roughness (Sz) in the vertical direction of 0.5 µm or more and 17 µm or less and the arithmetic mean roughness (Sa) of 0.05 µm or more and 3 µm or less, and specifically, the maximum height roughness (Sz) may be 1 µm or more and 15 µm or less, and the arithmetic mean roughness (Sa) may be 0.1 µm or more and 2 µm or less, and more specifically, the maximum height roughness (Sz) may be 2 µm or more and 10 µm or less, and the arithmetic mean roughness (Sa) may be 0.2 µm or more and 1 µm or less.

The transfer laminate including the lithium metal layer and the carrier film may be present in a wound state before being brought into contact with one surface of the electrode active material layer. In this case, the back surface of the carrier film on which the lithium metal layer is not formed comes into contact with the lithium metal layer. Since the lithium metal layer is a soft metal, a certain pressure is applied during winding, and as a result, the lithium metal layer is affected by the surface roughness of the back surface of the carrier film, such as by being pressed, which causes height differences in the lithium metal layer and may lead to formation of residual lithium during pre-lithiation. Therefore, the present invention is characterized in that it can minimize residual lithium on the electrode surface by reducing the surface roughness of the back surface of the carrier film. That is, when the surface roughness of the back surface of the carrier film opposite to the surface facing the lithium metal layer, according to an exemplary embodiment of the present specification, fall within the specific range, the formation of residual lithium on the electrode surface can be minimized.

In an exemplary embodiment of the present specification, both surfaces of the carrier film may have the maximum height roughness (Sz) of 17 µm or less and the arithmetic mean roughness (Sa) of 3 µm or less, and specifically, the maximum height roughness (Sz) may be 15 µm or less, and the arithmetic mean roughness (Sa) may be 2 µm or less, and more specifically, the maximum height roughness (Sz) may be 10 µm or less, and the arithmetic mean roughness (Sa) may be 1 µm or less. When the surface roughness of both surfaces falls within the specific range, the above-described effects can be maximized.

The method for manufacturing an electrode for a lithium secondary battery according to an exemplary embodiment of the present specification may further include a step of preparing a transfer laminate including a lithium metal layer and a carrier film before the laminating step.

In an exemplary embodiment of the present specification, the step of preparing a transfer laminate including a lithium metal layer and a carrier film may include providing the lithium metal layer on one surface of the carrier film by any one of a deposition method, a roll-pressing method, and a melting method. Specifically, in an exemplary embodiment of the present specification, the step of preparing a transfer laminate including a lithium metal layer and a carrier film may be performed by any one of a deposition method and a rolling method for forming the lithium metal layer on one surface of the carrier film, and more specifically, the step of preparing a transfer laminate including a lithium metal layer and a carrier film may be performed by a deposition method for forming the lithium metal layer on one surface of the carrier film.

That is, in an exemplary embodiment of the present specification, the transfer laminate may include the lithium metal layer provided on one surface of the carrier film by any one of a deposition method, a roll-pressing method, and a melting method, and specifically, by any one of a deposition method and a roll-pressing method, and more specifically, by a deposition method.

In an exemplary embodiment of the present specification, the method for depositing the lithium metal layer to one surface of the carrier film may be selected from a physical vapor deposition (PDV) method and a chemical vapor deposition (CVD) method, and among the physical vapor deposition methods, a thermal evaporation method may be mainly used. However, no such limitation is intended, and various deposition methods used in the art may be used.

In an exemplary embodiment of the present specification, the method of roll-pressing the lithium metal layer on one surface of the carrier film may involve bringing a lithium foil into contact with one surface of the carrier film and then forming a lithium thin film having a thickness of 10 µm or less through a continuous roll-pressing process.

In an exemplary embodiment of the present specification, the method for melting the lithium metal layer on one surface of the carrier film may involve melting lithium metal having a low melting point of 180.5°C and then coating it onto the carrier film using a doctor blade or the like.

In an exemplary embodiment of the present specification, the transfer laminate includes a lithium metal layer. In this case, the lithium metal layer is a layer including lithium metal for pre-lithiating at least one surface of the electrode active material layer, and a commonly used Li metal foil may be used, but no such limitation is intended.

In an exemplary embodiment of the present specification, a thickness of the lithium metal layer may be 10 µm or less, specifically 8 µm or less, and more specifically 6.5 µm or less, and 0.1 µm or more, specifically 0.5 µm or more, and more specifically 1 µm or more.

In an exemplary embodiment of the present specification, the thickness of the lithium metal layer may be 0.1 µm or more and 10 µm or less, specifically 0.5 µm or more and 8 µm or less, and more specifically 1 µm or more and 6.5 µm or less.

When the thickness of the lithium metal layer according to an exemplary embodiment of the present specification falls within the specific range, the irreversible capacity during charging and discharging of a lithium secondary battery can be sufficiently compensated.

In an exemplary embodiment of the present specification, the transfer laminate includes the carrier film described above.

Specifically, the transfer laminate according to an exemplary embodiment of the present specification may be a laminate in which a lithium metal layer and a carrier film are sequentially stacked.

In an exemplary embodiment of the present specification, the carrier film is an essential component for supporting a lithium metal layer during the process of preparing a transfer laminate, and can be used without limitation as long as it has the characteristics of being able to withstand process conditions such as high temperatures during the step of depositing the lithium metal layer and to prevent the problem of reverse peeling, where the lithium metal layer is transferred onto the carrier film during the process of laminating the lithium metal layer.

In an exemplary embodiment of the present specification, the carrier film may include one or more selected from the group consisting of polyethylene terephthalate (PET), polyimide (PI), poly(methylmethacrylate) (PMMA), polypropylene, polyethylene, and polycarbonate, and specifically, the carrier film may include one or more selected from the group consisting of polyethylene terephthalate (PET), polyimide (PI), and polyethylene, and more specifically, the carrier film may include polyethylene terephthalate (PET).

In an exemplary embodiment of the present specification, the carrier film can reduce the formation of unreacted residual lithium on the surface of the pre-lithiated electrode by having at least one surface with the surface roughness described above.

In an exemplary embodiment of the present specification, a thickness of the carrier film may fall within a range of 1 µm or more and 300 µm or less, specifically 5 µm or more and 200 µm or less, and more specifically 10 µm or more and 100 µm or less.

When the thickness of the carrier film falls within the specific range, the transfer of lithium metal to the electrode active material layer can occur efficiently, and the reverse transfer can be prevented.

In an exemplary embodiment of the present specification, the transfer laminate may further include a release layer between the lithium metal layer and the carrier film.

That is, in an exemplary embodiment of the present specification, the transfer laminate may further include a release layer, and in this case, the transfer laminate may be a laminate in which a lithium metal layer, a release layer, and a carrier film are sequentially stacked.

In an exemplary embodiment of the present specification, the release layer may include one or more selected from the group consisting of polycarbonate (PC), polydimethylsiloxane (PDMS), polymethylhydrosiloxane (PMHS), polyimide (PI), and polymethylmethacrylate (PMMA), and specifically, the release layer may include one or more selected from the group consisting of polycarbonate (PC), polydimethylsiloxane (PDMS), and polymethylmethacrylate (PMMA), and more specifically, the release layer may include polymethylmethacrylate (PMMA).

In an exemplary embodiment of the present specification, a thickness of the release layer may be 0.1 µm or more and 5 µm or less, specifically 0.2 µm or more and 3 µm or less, and more specifically 0.5 µm or more and 1 µm or less.

In an exemplary embodiment of the present specification, when the thickness of the release layer falls within the specific range, sufficient release force can be secured, and the release layer positioned on a surface after transfer of the lithium metal layer does not serve to block heat dissipation, thereby preventing accelerated formation of by-products.

In an exemplary embodiment of the present specification, the release layer may be formed by a coating method. For example, the coating method may be a method selected from the group consisting of dip coating, spray coating, spin coating, die coating, gravure coating, micro-gravure coating, comma coating, and roll coating, but is not limited thereto, and various coating methods that can be used in the art to form a coating layer may be used.

In an exemplary embodiment of the present specification, the step of laminating the transfer laminate on one surface of the electrode active material layer includes the steps of positioning the transfer laminate such that the lithium metal layer is in contact with one surface of the electrode active material layer; and pressing the electrode active material layer and the transfer laminate together.

The method for manufacturing an electrode for a lithium secondary battery according to an exemplary embodiment of the present specification has the effects of enabling pre-lithiation to proceed more actively in the electrode active material layer through transfer during the pressing step, and enabling the electrode to be formed thin despite high energy density.

In an exemplary embodiment of the present specification, the pressing step may be performed by positioning the transfer laminate such that the lithium metal layer is in contact with at least one surface of the electrode active material layer, and then performing a roll-pressing process. That is, the step of positioning the transfer laminate such that the lithium metal layer is in contact with at least one surface of the electrode active material layer and then performing pressing is a step of causing a pre-lithiation reaction to occur actively between the electrode active material layer and the lithium metal layer by applying load through a roller. The load is expressed in units of kgf because it is applied linearly while passing through the roller.

In an exemplary embodiment of the present specification, the pressing step may be performed under a load of 600 kgf or less.

Specifically, in an exemplary embodiment of the present specification, the pressing step may be performed under a load of 600 kgf or less, 500 kgf or less, 450 kgf or less, or 400 kgf or less, and 50 kgf or more, 60 kgf or more, 80 kgf or more, 100 kgf or more, 200 kgf or more, or more than 200 kgf.

In an exemplary embodiment of the present specification, the pressing step may be performed under a load of 50 kgf or more and 600 kgf or less, specifically, 50 kgf or more and 500 kgf or less, and more specifically, 50 kgf or more and 400 kgf or less, 60 kgf or more and 400 kgf or less, 100 kgf or more and 400 kgf or less, or more than 200 kgf and 400 kgf or less.

In an exemplary embodiment of the present specification, when a load falling within the specific range is applied, pre-lithiation by transfer can proceed more actively, and at the same time, pre-lithiation progresses within an appropriate range, thereby making it possible to minimize residual lithium on the electrode surface and loss of lithium introduced. In addition, the electrode thickness can be formed thin despite the high energy density.

That is, the laminating step according to an exemplary embodiment of the present specification may involve positioning the transfer laminate such that the lithium metal layer is in contact with one surface or both surfaces of the electrode active material layer, and then performing transfer through a roll-pressing process while applying a load within the specific range.

The method for manufacturing an electrode for a lithium secondary battery according to an exemplary embodiment of the present specification may further include a step of removing the carrier film.

In an exemplary embodiment of the present specification, the pre-lithiation may be a process where a pre-lithiation reaction begins between the electrode active material layer and the lithium metal layer from a time point at which the lithium metal layer comes into contact with at least one surface of the electrode active material layer, within several seconds to several minutes after the contact of the lithium metal layer, or from a time point at which a carrier film is removed.

In an exemplary embodiment of the present specification, the pre-lithiation reaction may be completed within several days, within 24 hours, or within several seconds to several minutes from the point in time at which the lithium metal layer comes into contact with at least one surface of the electrode active material layer.

In an exemplary embodiment of the present specification, whether the pre-lithiation reaction is completed may be determined by visually observing a color change of the electrode surface. Specifically, the surface immediately after lamination with the transfer laminate appears silver like lithium metal, but when the pre-lithiation reaction is completed, the surface of the pre-lithiated negative electrode exhibits either the color of the electrode or the polymer color of the release layer.

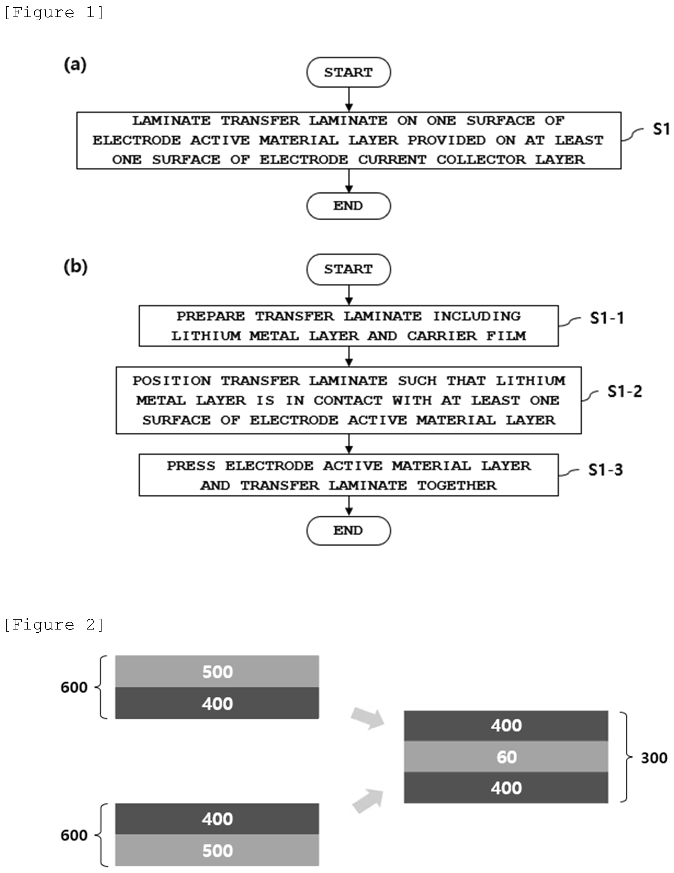

FIG. 1 is a flowchart showing a method for manufacturing an electrode for a lithium secondary battery according to an exemplary embodiment of the present specification. Specifically, FIG. 1(a) shows a method for manufacturing an electrode for a lithium secondary battery, including a step S1 of laminating a transfer laminate on one surface of an electrode active material layer provided on at least one surface of an electrode current collector layer, wherein the transfer laminate may include a lithium metal layer and a carrier film.

FIG. 1(b) shows a method for manufacturing an electrode for a lithium secondary battery, including a step S1-1 of preparing a transfer laminate including a lithium metal layer and a carrier film; a step S1-2 of positioning the transfer laminate such that the lithium metal layer is in contact with at least one surface of an electrode active material layer; and a step S1-3 of pressing the electrode active material layer and the transfer laminate together.

In this case, a step (not shown) of providing an electrode active material layer on at least one surface of an electrode current collector layer according to an exemplary embodiment of the present specification may be performed before the step S1-1, simultaneously with the step S1-1, or between the steps S1-1 and S1-2, but no such limitation is intended.

FIG. 2 is a diagram showing a transfer laminate 600 and an electrode 300 for a lithium secondary battery. Referring to FIG. 2, first, the transfer laminate 600 including a lithium metal layer 400 formed on one surface of a carrier film 500 can be seen, and in this case, illustration of the surface roughness of the carrier film 500 is omitted.

In addition, referring to FIG. 2, the electrode 300 for a lithium secondary battery can be seen in a state in which the transfer laminate 600 is laminated such that the lithium metal layer 400 is in contact with one surface of an electrode active material layer 60, and then the carrier film 500 is removed. In this case, the electrode active material layer 60 of FIG. 2 is specifically provided on each of both surfaces of the electrode current collector layer (not shown), but for simplicity, illustration of the electrode current collector layer is omitted. That is, the electrode for a lithium secondary battery of FIG. 2 is shown as a structure in which the lithium metal layer 400, the electrode active material layer 60, the electrode current collector layer (not shown), the electrode active material layer 60, and the lithium metal layer 400 are stacked in this order.

In this case, at the boundary between the lithium metal layer 400 and the electrode active material layer 60 positioned on each of both surfaces of the electrode 300 for a lithium secondary battery of FIG. 2, the pre-lithiation may be in progress or the pre-lithiation reaction may be completed. Depending on the degree of progress of the pre-lithiation reaction, the thicknesses of the lithium metal layer 400 of the transfer laminate 600 and the lithium metal layer 400 of the electrode 300 for a lithium secondary battery may be the same as or different from each other.

A transfer laminate for pre-lithiation according to another exemplary embodiment of the present specification includes a lithium metal layer; and a carrier film, wherein a surface of the carrier film facing the lithium metal layer may have a maximum height roughness (Sz) in a vertical direction of 17 µm or less and an arithmetic mean roughness (Sa) of 3 µm or less.

In another exemplary embodiment of the present specification, the transfer laminate for pre-lithiation refers to the same transfer laminate as that described above in the method for manufacturing an electrode for a lithium secondary battery. That is, the descriptions regarding the lithium metal layer and the carrier film described above, the surface roughness of the carrier film, the method for manufacturing the transfer laminate, and the method for laminating the transfer laminate on at least one surface of the electrode active material layer are equally applicable.

The method for manufacturing an electrode for a lithium secondary battery according to an exemplary embodiment of the present specification may further include a step of providing an electrode active material layer on at least one surface of an electrode current collector layer, wherein the step of providing an electrode active material layer may include steps of preparing an electrode slurry; and applying and drying the electrode slurry on at least one surface of the electrode current collector layer.

In an exemplary embodiment of the present specification, the electrode slurry may include an electrode active material layer composition; and a slurry solvent.

In an exemplary embodiment of the present specification, the solid content of the electrode slurry may fall within a range of 5% or more and 60% or less, specifically 7% or more and 50% or less, and more specifically 10% or more and 40% or less.

The solid content of the electrode slurry may refer to a content of the electrode active material layer composition included in the electrode slurry, and may refer to a content of the electrode active material layer composition based on total 100 parts by weight of the electrode slurry.

When the solid content of the electrode slurry falls within the specific range, an appropriate viscosity is secured when forming an electrode active material layer, thereby minimizing particle agglomeration of the electrode active material layer composition and enabling efficient formation of the electrode active material layer.

In an exemplary embodiment of the present specification, the slurry solvent is not limited thereto as long as it can dissolve the electrode active material layer composition. For example, the slurry solvent may be water (e.g., distilled water) or NMP.

In an exemplary embodiment of the present specification, the electrode may be a negative electrode or a positive electrode.

That is, in an exemplary embodiment of the present specification, the step of providing an electrode active material layer on at least one surface of the electrode current collector layer may be a step of providing a negative electrode active material layer on at least one surface of a negative electrode current collector layer, or may be a step of providing a positive electrode active material layer on at least one surface of a positive electrode current collector layer.

Below, the step of providing a negative electrode active material layer will be first described, but the same method can be applied to the step of providing a positive electrode active material layer, and the following description can be applied to each configuration of the positive electrode active material layer (a positive electrode active material, a positive electrode conductive material, a positive electrode binder, and the like).

According to an exemplary embodiment of the present specification, a negative electrode may be formed by applying and drying the negative electrode slurry on a negative electrode current collector layer, and through the drying step, the slurry solvent in the negative electrode slurry may be dried.

In an exemplary embodiment of the present specification, the negative electrode active material layer composition may include one or more selected from the group consisting of a negative electrode active material; a negative electrode conductive material; and a negative electrode binder, and specifically, the negative electrode active material may include a carbon-based active material and a silicon-based active material.

That is, the negative electrode active material layer according to an exemplary embodiment of the present specification may include a carbon-based active material and a silicon-based active material, as the negative electrode active material.

The negative electrode active material layer according to an exemplary embodiment of the present specification may include a carbon-based active material and a silicon-based active material as the negative electrode active material, and the silicon-based active material may include one or more selected from the group consisting of Si, silicon oxide, Si/C, and a Si alloy.

Specifically, in an exemplary embodiment of the present specification, the silicon-based active material may include one or more selected from the group consisting of Si and silicon oxide, and more specifically, the silicon-based active material may include Si.

In an exemplary embodiment of the present specification, the carbon-based active material may include one or more selected from the group consisting of graphite such as natural graphite or artificial graphite, carbon fiber, non-graphitizable carbon, carbon black, carbon nanotubes, fullerene, and activated carbon, and specifically, may include one or more selected from the group consisting of natural graphite and artificial graphite.

When the carbon-based active material is used as a negative electrode active material according to an exemplary embodiment of the present specification, reversible intercalation and deintercalation of lithium ions are possible, and structural and electrical properties can be maintained. Among these, graphite-based active materials can ensure the life characteristics of lithium secondary batteries due to their excellent reversibility. Since the graphite-based active material has a low discharge voltage of -0.2 V with respect to lithium, a battery using the graphite-based active material can exhibit a high discharge voltage of 3.6 V, and thus can provide many advantages in terms of energy density of a lithium secondary battery.

In an exemplary embodiment of the present specification, when artificial graphite is used as the carbon-based active material, the degree of orientation is relatively low during roll-pressing of the electrode, enabling favorable lithium-ion intercalation/deintercalation characteristics. Therefore, the excellent rapid charging performance of the battery is ensured, and the degree of expansion during charging and discharging is low, enabling excellent lifetime characteristics.

In an exemplary embodiment of the present specification, when natural graphite is used as the carbon-based active material, the output and capacity of the lithium secondary battery are improved, and the excellent adhesion allows a reduced amount of binder used or the like, thereby enabling the realization of a high-capacity, high-density negative electrode.

The natural graphite may be generally in the form of plate-like agglomerates before being processed, and the plate-like particles may be manufactured in the form of a sphere having a smooth surface through post-treatment processing such as particle pulverization and re-assembly process for use as an active material for manufacture of an electrode.

In an exemplary embodiment of the present specification, the negative electrode active material layer may include a carbon-based active material and a silicon-based active material as the negative electrode active material, the carbon-based active material may include one or more selected from the group consisting of natural graphite and artificial graphite, and the silicon-based active material may include Si.

In an exemplary embodiment of the present specification, the negative electrode active material may include the carbon-based active material and the silicon-based active material in a weight ratio of 90:10 to 40:60, specifically 80:20 to 50:50, and more specifically ratio of 70:30 to 60:40.

In an exemplary embodiment of the present specification, the negative electrode active material may be included in an amount of 60 parts by weight or more and 99 parts by weight or less, specifically, 70 parts by weight or more and 95 parts by weight or less, and more specifically, 80 parts by weight or more and 90 parts by weight or less, based on 100 parts by weight of the negative electrode active material layer.

In an exemplary embodiment of the present specification, the negative electrode conductive material is not particularly limited as long as it has conductivity without causing a chemical change in the battery. For example, graphite such as natural graphite or artificial graphite; carbon black such as acetylene black, Ketjen black, channel black, furnace black, lamp black, and thermal black; a conductive fiber such as a carbon fiber or a metal fiber; a conductive tube such as a carbon nanotube; fluorocarbon powder; metal powder such as aluminum, and nickel powders; a conductive whisker such as zinc oxide and potassium titanate; a conductive metal oxide such as titanium oxide; or a conductive material such as a polyphenylene derivative may be used.

In an exemplary embodiment of the present specification, as the negative electrode conductive material, a conductive tube such as a single-walled carbon nanotube (SWCNT) or a multi-walled carbon nanotube (MWCNT) may be used, and more specifically, a single-walled carbon nanotube (SWCNT) may be used.

In an exemplary embodiment of the present invention, the content of the negative electrode conductive material in the negative electrode active material layer may be 0.01 to 30 parts by weight, specifically 0.03 to 25 parts by weight, and more specifically 0.1 to 10 parts by weight, relative to 100 parts by weight of the negative electrode active material layer.

In an exemplary embodiment of the present specification, the negative electrode binder may serve to improve adhesion between negative electrode active material particles and adhesive strength between the negative electrode active material particles and the negative electrode current collector. The negative electrode binder may be one known in the art, and nonlimiting examples thereof include at least one selected from the group consisting of polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, polyhydroxypropyl cellulose, regenerated cellulose, polyvinylpyrrolidone, polytetrafluoroethylene, polyethylene, polypropylene, ethylenepropylene-diene monomer (EPDM), sulfonated EPDM, styrene butadiene rubber (SBR), fluoro rubber, polyacrylic acid, and a material in which hydrogen of these is substituted with Li, Na, Ca, or the like, and may also include various copolymers thereof.

In particular, the negative electrode binder according to an exemplary embodiment of the present specification serves to support the negative electrode active material and the negative electrode conductive material in order to prevent distortion and structural deformation of the negative electrode structure during the volume expansion and relaxation of the silicon-based active material. All general negative electrode binders satisfying the above-described role can be applied, specifically, an aqueous binder can be used, and more specifically, a styrene butadiene rubber (SBR)-based binder may be used.

According to another exemplary embodiment of the present specification, the negative electrode active material layer may further include a dispersant. The dispersant is characterized in that it can improve the dispersibility of negative electrode active materials or negative electrode binder materials, and also contribute to the adhesive strength with the negative electrode current collector layer, thereby preventing the negative electrode active material from falling off from the negative electrode current collector layer.

The dispersant according to an exemplary embodiment of the present specification is cellulose-based polymer, and may be one or more selected from the group consisting of carboxymethyl cellulose (CMC), methyl cellulose (MC), hydroxypropyl cellulose (HPC), methyl hydroxypropyl cellulose (MHPC), ethyl hydroxyethyl cellulose (EHEC), methyl ethyl hydroxyethyl cellulose (MEHEC), and cellulose gum, and specifically, may be one or more selected from the group consisting of carboxymethyl cellulose (CMC), methyl cellulose (MC), and hydroxypropyl cellulose (HPC), and more specifically, may be carboxymethyl cellulose (CMC).

In an exemplary embodiment of the present specification, the dispersant may be included in an amount of 0.1 parts by weight or more and 1 part by weight or less, specifically, 0.15 parts by weight or more and 0.9 parts by weight or less, and more specifically, 0.3 parts by weight or more and 0.8 parts by weight or less, with respect to 100 parts by weight of the total solid content of the negative electrode slurry.

In an exemplary embodiment of the present specification, the negative electrode current collector layer may generally have a thickness of 1 µm to 100 µm, specifically 1 µm to 50 µm, and more specifically 1 µm to 30 µm. The negative electrode current collector layer is not particularly limited as long as it has high conductivity without causing a chemical change in the battery, and for example, copper, stainless steel, aluminum, nickel, titanium, fired carbon, copper or stainless steel surface-treated with carbon, nickel, titanium, silver, or the like, an aluminum-cadmium alloy, and the like may be used. In addition, the negative electrode current collector layer may have microscopic irregularities formed on a surface to enhance a bonding force of the negative electrode active material, and may be used in various forms such as a film, a sheet, a foil, a net, a porous body, a foamed body, or a non-woven fabric body.

An electrode for a lithium secondary battery manufactured by the above-described manufacturing method according to an exemplary embodiment of the present specification may include an electrode current collector layer; and an electrode active material layer, and an area of residual lithium present on a surface of the electrode for a lithium secondary battery may be 6% or less of a total surface area of the electrode for a lithium secondary battery.

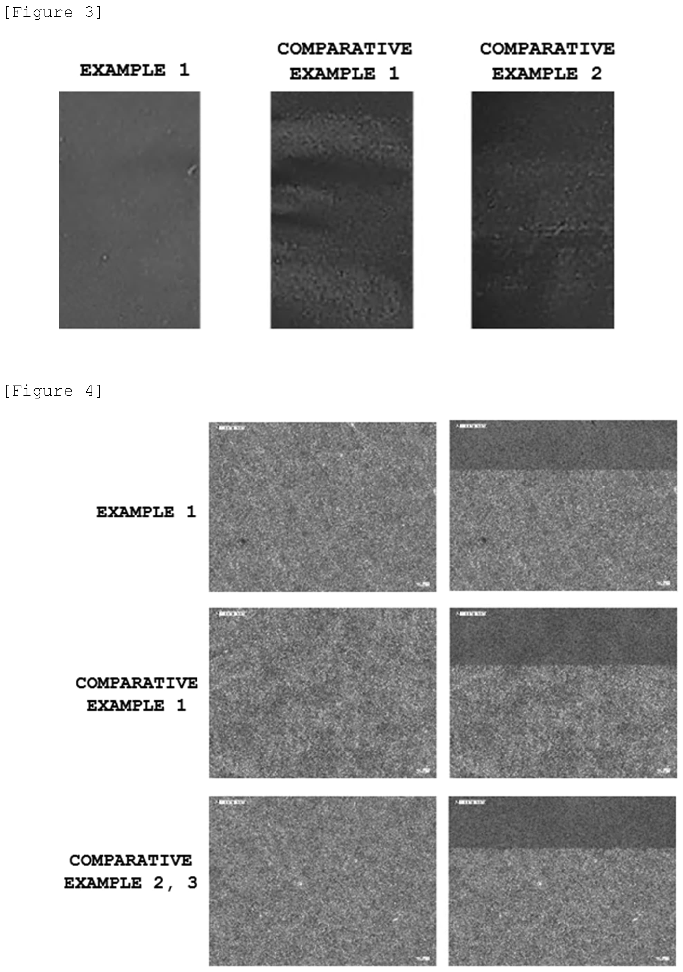

FIG. 3 shows surfaces of electrodes for a lithium secondary battery after completion of pre-lithiation, obtained using a microscope (KEYENCE VHX-7000N). Specifically, referring to FIG. 3, when residual lithium remains on the surface of an electrode for a lithium secondary battery after completion of pre-lithiation, it can be confirmed that the residual lithium portion is reflected close to white and appears bright.

In the present specification, the area of lithium remaining on the surface of the electrode for a lithium secondary battery can be calculated by observing the surface of the electrode after removal of the carrier film and completion of the pre-lithiation under a microscope.

FIG. 4 is a diagram showing surfaces of electrodes for a lithium secondary battery after completion of pre-lithiation, observed at a magnification of ×200 under a microscope (KEYENCE VHX-7000N). Specifically, referring to FIG. 4, as in FIG. 3, it can be confirmed that the residual lithium portion is reflected close to white and appears as a bright dot. After a specific region (a shaded portion in the upper of the right figure) is designated, the area of residual lithium with respect to the specific region can be calculated by detecting portions showing brightness differences. In the electrode for a lithium secondary battery according to an exemplary embodiment of the present specification, the area of the residual lithium may be 6% or less of the area of the specific region.

A lithium secondary battery according to an exemplary embodiment of the present specification may include the electrode for a lithium secondary battery described above; a separator; and an electrolyte solution.

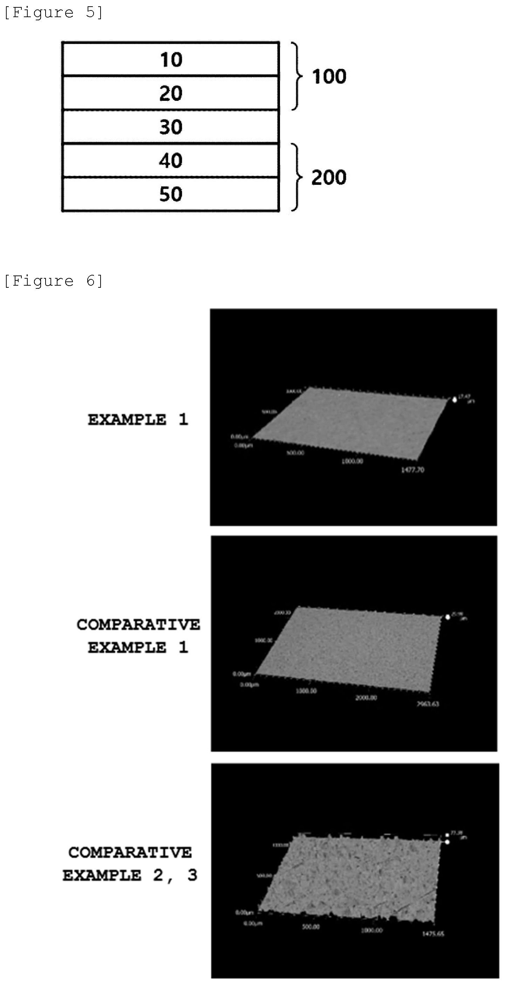

FIG. 5 is a view showing a stack structure of a lithium secondary battery manufactured according to an exemplary embodiment of the present invention. Specifically, a positive electrode 100 for a lithium secondary battery including a positive electrode active material layer 20 on one surface of a positive electrode current collector layer 10 can be seen, a negative electrode 200 for a lithium secondary battery including a negative electrode active material layer 40 on one surface of a negative electrode current collector layer 50 can be seen, and the positive electrode 100 for a lithium secondary battery and the negative electrode 200 for a lithium secondary battery are formed in a stacked structure with a separator 30 interposed therebetween. The electrode for a lithium secondary battery according to an exemplary embodiment of the present specification may be the positive electrode 100 for a lithium secondary battery, or may be the negative electrode 200 for a lithium secondary battery.

In an exemplary embodiment of the present specification, the positive electrode may include, as the positive electrode active material, a lithium composite transition metal compound including nickel (Ni) and cobalt (Co), and further including one or more elements selected from the group consisting of Na, K, Mg, Ca, Sr, Ni, Co, Ti, Al, Si, Sn, Mn, Cr, Fe, V, and Zr.

In an exemplary embodiment of the present specification, the positive electrode may include a lithium composite transition metal compound including nickel (Ni), cobalt (Co), and manganese (Mn), as the positive electrode active material.

In an exemplary embodiment of the present specification, the positive electrode active material may be included in an amount of 60 parts by weight or more and 99 parts by weight or less, specifically, 70 parts by weight or more and 95 parts by weight or less, and more specifically, 80 parts by weight or more and 94 parts by weight or less, based on 100 parts by weight of the positive electrode active material layer.

In an exemplary embodiment of the present specification, the positive electrode slurry may include a positive electrode conductive material and a positive electrode binder, and may further include a thickener and a slurry solvent.

In an exemplary embodiment of the present specification, additional components such as the positive electrode current collector layer, positive electrode conductive material, positive electrode binder, thickener, and slurry solvent, and the method for manufacturing the positive electrode may be used without limitation as long as they are known in the art within the scope to which the above-described description applies.

In an exemplary embodiment of the present specification, the separator serves to separate the negative electrode and the positive electrode and to provide a transport path for lithium ions, in which any separator may be used as the separator without particular limitation as long as it is typically used in a secondary battery, and particularly, a separator having high moisture-retention ability for an electrolyte solution as well as a low resistance to the ion transport of electrolyte solution ions is preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a stacked structure having two or more layers thereof may be used. In addition, a usual porous non-woven fabric, for example, a non-woven fabric made of high-melting point glass fibers, polyethylene terephthalate fibers, or the like may be used. Furthermore, a coated separator including a ceramic component or polymer material may be used so as to secure heat resistance or mechanical strength, and a separator having a single layer or multilayer structure may be selectively used.

In an exemplary embodiment of the present specification, the electrolyte solution may include, but is not limited to, an organic liquid electrolyte solution, an inorganic liquid electrolyte solution, a solid polymer electrolyte solution, a gel-type polymer electrolyte solution, a solid inorganic electrolyte solution, and a molten inorganic electrolyte solution, which can be used in the manufacture of a lithium secondary battery.

Specifically, the electrolytic solution may include a nonaqueous organic solvent and a metal salt.

A battery module according to an exemplary embodiment of the present specification may include the lithium secondary battery described above.

A battery pack according to another exemplary embodiment of the present specification may include the aforementioned lithium secondary battery, or a battery module including the aforementioned lithium secondary battery.

Since the lithium secondary battery according to the exemplary embodiments of the present specification stably exhibits excellent discharge capacity, output characteristics and cycle performance, it can be used as a power source for a portable device such as a mobile phone, a laptop computer, and a digital camera, as well as a medium to large sized device selected from the group consisting of an electric vehicle, a hybrid electric vehicle, a plug-in hybrid electric vehicle, and a power storage system. For example, the battery module or battery pack may be used as a power source for one or more medium to large sized devices, such as a power tool; an electric car such as an electric vehicle (EV), a hybrid electric vehicle, and a plug-in hybrid electric vehicle (PHEV); or a power storage system.

### [Mode for Invention]

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

### <Preparation Example>

### Example 1

### Preparation of Transfer Laminate

A transfer laminate was prepared by forming a release layer by coating a solution containing polymethylmethacrylate (PMMA) onto a polyethylene terephthalate (PET) carrier film satisfying the maximum height roughness (Sz) and arithmetic mean roughness (Sa) listed in Table 1 below, and then depositing a lithium metal layer (a thickness: 6.2 µm) on the release layer by physical vapor deposition (PVD).

### Preparation of Electrode

A negative electrode slurry was prepared including 90 g of Si and graphite in a ratio of 30:70 as negative electrode active materials, 5 g of SBR (styrene-butadiene rubber) and 4 g of CMC (carboxymethyl cellulose) as binders, and additionally a CNT pre-dispersion solution containing 0.09 g of a dispersant and 0.91 g of single-walled CNT.

The negative electrode slurry was coated on a copper foil (8 µm thick) to have a capacity per unit area of 3.8 mAh/cm² and then dried to prepare a negative electrode.

Then, the transfer laminate prepared above was pressed and laminated on both surfaces of the electrode active material layer of the electrode under a transfer load of 400 kgf, and pre-lithiation was performed at a capacity of 1 mAh/cm².

### Comparative Example 1

An electrode for a lithium secondary battery of Comparative Example 1 was prepared in the same manner as in Example 1, except that the arithmetic mean roughness (Sa) of the PET carrier film used during the pre-lithiation was 1.28 µm and the maximum height roughness (Sz) was 17.62 µm.

### Comparative Example 2

An electrode for a lithium secondary battery of Comparative Example 2 was prepared in the same manner as in Example 1, except that the arithmetic mean roughness (Sa) of the PET carrier film used during the pre-lithiation was 13.34 µm and the maximum height roughness (Sz) was 53.9 µm.

### Comparative Example 3

An electrode for a lithium secondary battery of Comparative Example 3 was prepared in the same manner as in Comparative Example 2, except that the pressing load during the pre-lithiation was 200 kgf.

FIG. 6 is 3D representations showing the carrier films before deposition of the lithium metal layer used in Example 1 and Comparative Examples 1 to 3 for measuring surface roughness. Specifically, FIG. 6 shows images that were obtained using a microscope (KEYENCE VHX-7000N), followed by height correction and subsequent surface roughness measurement, and were 3D-visualized to better represent surface roughness. Referring to FIG. 6, the arithmetic mean roughness (Sa) and the maximum height roughness (Sz) are listed in Table 1 below.

### Experimental Example 1: Visual Evaluation of Residual Lithium on Surfaces of Electrodes for Lithium Secondary Battery

The surfaces of the electrodes for a lithium secondary battery of Example 1, and Comparative Examples 1 and 2 were obtained using a microscope (KEYENCE VHX-7000N) and are shown in FIG. 3. Specifically, referring to FIG. 3, because the surface of the electrode for a lithium secondary battery of Example 1 contains less residual lithium, the number of bright portions is significantly smaller. In contrast, because the electrodes for a lithium secondary battery of Comparative Examples 1 and 2 have residual lithium remaining on their surfaces, many portions reflected close to white and appearing bright can be observed. The surface of the electrode for a lithium secondary battery of Comparative Example 3 is not shown, but has a large amount of residual lithium remaining on the surface, as in Comparative Example 2.

### Experimental Example 2: Evaluation of Residual Lithium Areas on Surfaces of Electrodes for Lithium Secondary Battery

The carrier films used in the preparation of the electrodes for a lithium secondary battery of Example 1 and Comparative Examples 1 to 3 and the pressing load during lamination are listed in Table 1 below.

As shown in FIG. 4, the surfaces of the electrodes for a lithium secondary battery of Example 1 and Comparative Examples 1 to 3 after completion of pre-lithiation were observed at a magnification of 200× under a microscope (KEYENCE VHX-7000N). A specific region (a shaded portion in the upper of the right figure) was designated on the surface, and the area of residual lithium with respect to the specific region was calculated by detecting portions showing brightness differences. The results are listed in Table 1 below.

**[Table 1]**

| | Arithmetic mean roughness (Sa) (µm) | Maximum height roughness (Sz) (µm) | Pressing load (kgf) | Residual lithium area (%) |
|---|---|---|---|---|
| Example 1 | 0.27 | 7.06 | 400 | 5.5 |
| Comparative Example 1 | 1.28 | 17.62 | 400 | 6.1 |
| Comparative Example 2 | 13.34 | 53.9 | 400 | 8.65 |
| Comparative Example 3 | 13.34 | 53.9 | 200 | 9.07 |

Referring to Table 1 above, it can be confirmed that the electrode for a lithium secondary battery of Example 1, which was prepared using the carrier film satisfying the surface roughness range according to an exemplary embodiment of the present specification, has the smallest area of residual lithium on the electrode surface in comparison with Comparative Examples 1 to 3.

Specifically, the electrode for a lithium secondary battery of Comparative Example 1, which was prepared using the carrier film in which either the maximum height roughness (Sz) or the arithmetic mean roughness (Sa) did not satisfy the surface roughness range according to an exemplary embodiment of the present specification, particularly the carrier film not satisfying the range of the maximum height roughness (Sz), had an area of residual lithium that was 10.9% larger than that of Example 1.

The electrode for a lithium secondary battery of Comparative Example 2, which did not satisfy the ranges of both the maximum height roughness (Sz) and the arithmetic mean roughness (Sa) according to an exemplary embodiment of the present specification, had an area of residual lithium that was 57.27% larger than that of Example 1.

Comparative Example 3 had the same maximum height roughness (Sz) and arithmetic mean roughness (Sa) as those of Comparative Example 2. However, since the pressing was performed under a load smaller than that of Comparative Example 2 after the transfer laminate was brought into contact with one surface of the electrode active material layer, it can be confirmed that the pre-lithiation reaction did not occur sufficiently, resulting in the formation of a larger amount of residual lithium on the electrode surface. That is, the electrode for a lithium secondary battery of Comparative Example 3 had an area of residual lithium that was 64.9% larger than that of Example 1.

Therefore, when lamination is performed using a transfer laminate including a carrier film that falls within the ranges of the maximum height roughness (Sz) in the vertical direction of 17 µm or less and the arithmetic mean roughness (Sa) of 3 µm or less according to an exemplary embodiment of the present invention, the amount of residual lithium formed on the electrode surface after completion of pre-lithiation can be significantly reduced, thereby suppressing lithium precipitation and loss of introduced lithium.

### <Explanation of Reference Numerals and Symbols>

10: positive electrode current collector layer
20: positive electrode active material layer
30: separator
40: negative electrode active material layer
50: negative electrode current collector layer
60: electrode active material layer
100: positive electrode for lithium secondary battery
200: negative electrode for lithium secondary battery
300: electrode for lithium secondary battery
400: lithium metal layer
500: carrier film
600: transfer laminate

## Claims

1. A method for manufacturing an electrode for a lithium secondary battery, the method comprising:
laminating a transfer laminate comprising a lithium metal layer and a carrier film on one surface of an electrode active material layer provided on at least one surface of an electrode current collector layer,
wherein at least one surface of the carrier film has a maximum height roughness (Sz) in a vertical direction of 17 µm or less and an arithmetic mean roughness (Sa) of 3 µm or less.

2. The method of claim 1, wherein a surface of the carrier film facing the lithium metal layer has the maximum height roughness (Sz) in the vertical direction of 17 µm or less and the arithmetic mean roughness (Sa) of 3 µm or less.

3. The method of claim 1, wherein a back surface of the carrier film opposite to a surface facing the lithium metal layer has the maximum height roughness (Sz) in the vertical direction of 17 µm or less and the arithmetic mean roughness (Sa) of 3 µm or less.

4. The method of claim 1, wherein the carrier film comprises one or more selected from the group consisting of polyethylene terephthalate (PET), polyimide (PI), poly(methylmethacrylate) (PMMA), polypropylene, polyethylene, and polycarbonate.

5. The method of claim 1, wherein a thickness of the lithium metal layer is 10 µm or less.

6. The method of claim 1, wherein the laminating a transfer laminate on one surface of an electrode active material layer comprises
positioning the transfer laminate such that the lithium metal layer is in contact with one surface of the electrode active material layer, and
pressing the electrode active material layer and the transfer laminate together.

7. The method of claim 1, wherein the transfer laminate comprises the lithium metal layer provided on one surface of the carrier film by any one of a deposition method, a roll-pressing method, and a melting method.

8. An electrode for a lithium secondary battery, comprising:
an electrode current collector layer; and
an electrode active material layer, wherein
the electrode for a lithium secondary battery is manufactured by the method of any one of claims 1 to 7, and
an area of residual lithium present on a surface of the electrode for a lithium secondary battery is 6% or less of a total surface area of the electrode for a lithium secondary battery.

9. A lithium secondary battery comprising:
the electrode for a lithium secondary battery of claim 8;
a separator; and
an electrolyte solution.

10. A battery module comprising the lithium secondary battery of claim 9.

11. A battery pack comprising the battery module of claim 10.

12. A battery pack comprising the lithium secondary battery of claim 9.

13. A transfer laminate for pre-lithiation comprising:
a lithium metal layer; and
a carrier film,
wherein a surface of the carrier film facing the lithium metal layer has a maximum height roughness (Sz) in a vertical direction of 17 µm or less and an arithmetic mean roughness (Sa) of 3 µm or less.

14. The transfer laminate for pre-lithiation of claim 13, wherein a back surface of the carrier film opposite to a surface facing the lithium metal layer has the maximum height roughness (Sz) in the vertical direction of 17 µm or less and the arithmetic mean roughness (Sa) of 3 µm or less.

15. The transfer laminate for pre-lithiation of claim 13, wherein the carrier film comprises one or more selected from the group consisting of polyethylene terephthalate (PET), polyimide (PI), poly(methylmethacrylate) (PMMA), polypropylene, polyethylene, and polycarbonate.

16. The transfer laminate for pre-lithiation of claim 13, wherein a thickness of the lithium metal layer is 0.1 µm or more and 10 µm or less.
